# EUROPÄISCHE PATENTSCHRIFT

(11) **EP 4 117 837 B1**
(45) Veröffentlichungstag und Bekanntmachung des Hinweises auf die Patenterteilung: **24.04.2024**
(21) Anmeldenummer: 21720164.9
(22) Anmeldetag: 08.03.2021
(51) Int. Cl.: B21D 5/02, B21D 5/04, B23K 11/00, B23P 23/00

(54) **BIEGEMASCHINE**
BENDING MACHINE
PRESSE PLIEUSE

(30) Priorität: 11.03.2020 AT 502052020
(43) Veröffentlichungstag der Anmeldung: 18.01.2023
(73) Patentinhaber: TRUMPF Maschinen Austria GmbH & Co. KG., 4061 Pasching (AT)
(72) Erfinder: WEISS, Thomas, 4020 Linz (AT)
(74) Vertreter: Burger, Hannes
(86) Internationale Anmeldenummer: PCT/AT2021/060083
(87) Internationale Veröffentlichungsnummer: WO 2021/179028

(56) Entgegenhaltungen:
- EP-B1- 1 210 995
- JP-A- H02 175 021
- JP-A- H02 175 022
- JP-A- H02 200 316
- JP-A- H02 274 315

## Beschreibung

Die Erfindung betrifft eine Biegemaschine, insbesondere Schwenkbiegemaschine, zum Biegen eines Werkstückes gemäß dem Oberbegriff des Anspruch 1 und ein Verfahren zum Biegen eines Werkstückes gemäß Anspruch 16.

Bei gewissen Verfahren des (Laser)Schweißens muss der Schweißspalt einer Ecknaht sehr klein sein und kann somit auch jenseits der typischen Genauigkeit des (Schwenk)Biegens liegen. Daher sind oft komplizierte Spannvorrichtungen notwendig, die insbesondere im Bereich der Vollautomatisierung problematisch sind.

Die EP1210995B1 offenbart eine Maschine für die Bearbeitung von Werkstücken, mit einer Biegestation und einer Fügevorrichtung zur Durchführung einer Fügeoperation an dem Werkstück. Die Biegestation umfasst eine Positioniereinrichtung zum Positionieren des Werkstücks gegenüber einem Biegewerkzeug der Biegestation. Die Fügeeinrichtung ist mittels des Verfahrantriebes des Positionieranschlages der Positioniereinrichtung in eine Arbeitsposition bzw. relativ zu dem Werkstück verfahrbar. Als Fügevorrichtungen sind Laserschweißköpfe vorgesehen.

Die JPH0671531A offenbart eine Biegepresse mit einer Oberwerkzeughalterung und einer Unterwerkzeughalterung. Seitlich der Werkzeughalterungen sind Schweißvorrichtungen in Form von Gelenkrobotern, die einen Schweißkopf tragen, angeordnet.

Die JPH02274316A offenbart eine kombinierte Biege- und Schweißvorrichtung. Das Schweißgerät ist dabei mittels einer linearen Führung an einem Rahmen der Vorrichtung gelagert. Der Schweißkopf des Schweißgerätes ist in seiner Arbeitsstellung auf Höhe des gebogenen Werkstückes angeordnet.

Die JPH02274315A offenbart eine Biegemaschine mit den Merkmalen des Oberbegriffes des Anspruch 1.

Die JPH02175021A offenbart eine Biegemaschine, bei der eine Schweißeinrichtung durch eine Halteeinrichtung getragen wird. Diese Halteeinrichtung ist von einem Biegebalken, an dessen Unterseite Biegewerkzeuge angeordnet sind, getragen und an diesem verfahrbar gelagert.

Die JPH02200316A offenbart dieselbe Konfiguration wir wie die vorangegangene Druckschrift.

Die JPH02175022A offenbart eine Biegemaschine, bei der die Schweißeinrichtung von einer separaten Vorrichtung bzw. einem Roboterarm getragen wird.

Der Nachteil bekannter Lösungen besteht insbesondere darin, dass für die Schweißeinrichtung ein eigens dafür vorgesehener Antrieb erforderlich ist, wodurch sich durch die Integration einer Schweißeinrichtung einerseits erhöhter Platzbedarf, andererseits hohe Kosten ergeben. Die Anordnung bzw. Lagerung der Schweißeinrichtung erfordern im Stand der Technik zusätzliche Halterungen oder Aufstandsflächen, wodurch weiterer Raum beansprucht wird und die Zugänglichkeit zum Arbeitsbereich weiter eingeschränkt wird. Auch die in EP1210995B1 vorgeschlagene Lösung, nämlich den Verfahrantrieb der Positionieranschläge für die Laserschweißköpfe zu verwenden, ist mit Nachteilen verbunden. Insbesondere eignet sich eine solche Anordnung nicht für Biegemaschinen ohne verfahrbare Positionieranschläge und vor allem auch nicht für andere Arten von Biegemaschinen, wie Schwenkbiegemaschinen.

Aufgabe der vorliegenden Erfindung war es, die Nachteile des Standes der Technik zu überwinden und eine Biegemaschine zur Verfügung zu stellen, mittels derer die Schweißeinrichtung auf einfache Weise zu der Stelle des Werkstückes, die geschweißt werden soll, herangefahren werden kann. Zudem soll der Platzbedarf geringgehalten werden und die Biegemaschine kostengünstig gestaltet werden können. Es soll auch unmittelbar nach einem Biegevorgang möglich sein, zwei Abschnitte des Werkstückes mittels Herstellung einer Schweißverbindung - zumindest vorübergehend - relativ zueinander fixieren zu können.

Diese Aufgabe wird mittels einer Biegemaschine der eingangs genannten Art dadurch gelöst, dass die zumindest eine erste Biegewerkzeughalterung, welche eine Schweißeinrichtung trägt, quer zur Richtung ihrer Arbeitsbewegung entlang der Biegelinie verfahrbar gelagert ist
und/oder
dass die erste Biegewerkzeughalterung, welche eine Schweißeinrichtung trägt, von einer weiteren ersten Biegewerkzeughalterung getragen und an dieser verfahrbar gelagert ist, vorzugsweise mittels zumindest einer Führungsschiene.

Die zumindest eine erste Biegewerkzeughalterung, die zur Ausführung einer Arbeitsbewegung und/oder zur Positionierung eines Biegewerkzeuges bewegbar gelagert ist, trägt bzw. hält die zumindest eine Schweißeinrichtung. Die Schweißeinrichtung ist somit zusammen mit der ersten Biegewerkzeughalterung bewegbar. Durch die Bewegung der ersten Biegewerkzeughalterung ist die Schweißeinrichtung für einen Schweißvorgang relativ zum Werkstück bzw. relativ zur Werkstückhalterung positionierbar.

Die erste(n) Biegewerkzeughalterung(en) wirken mit einem oder mehreren Antrieben zusammen und werden von dem/den Antrieben - zur Ausführung einer Arbeitsbewegung und/oder zur Positionierung eines Biegewerkzeuges - angetrieben. Der/die Antriebe werden von einer Steuereinrichtung der Biegemaschine angesteuert.

Aufgrund der Tatsache, dass die von der ersten Biegewerkzeughalterung gehaltenen Biegewerkzeuge an dem Biegevorgang beteiligt sind und/oder die erste Biegewerkzeughalterung, z.B. aus einem peripheren Bereich der Biegemaschine, in den Arbeitsbereich bewegbar ist (um dort Biegewerkzeuge zu positionieren), gelangt somit die erste Biegewerkzeughalterung in den unmittelbaren Bereich des Werkstückes. Durch die die Anordnung der Schweißeinrichtung an der ersten Biegewerkzeughalterung ist demnach auch die Schweißeinrichtung in einer für den Schweißvorgang am Werkstück richtigen Lage positionierbar.

Die erste Biegewerkzeughalterung kann ein oder mehrere Biegewerkzeuge halten. Das Biegewerkzeug kann an der Biegewerkzeughalterung auf verschiedenste Weise befestigt sein, z.B. in einer Führungsschiene und/oder mit Klemmelementen und/oder mittels Schraubverbindungen.

Unter Arbeitsbewegung wird jene Bewegung der ersten Biegewerkzeughalterung verstanden, die den Biegevorgang bewirkt, also jener Vorgang, bei dem ein von der ersten Biegewerkzeughalterung gehaltenes Biegewerkzeug ein (geklemmtes bzw. gehaltenes) Werkstück biegt. Die Richtung der Arbeitsbewegung ist üblicherweise senkrecht zur Richtung der Positionierbewegung (zur Positionierung der Biegewerkzeuge entlang des Werkstückes). Die Richtung der Arbeitsbewegung ist vorzugsweise vertikal, während die Positionierbewegung horizontal sein kann.

Die erste(n) Biegewerkzeughalterung(en) ist/sind durch (zumindest) einen Antrieb antreibbar, um die Arbeitsbewegung(en) zu vollführen. Eine erste Biegewerkzeughalterung kann auch durch einen Verfahrantrieb antreibbar sein, um die Positionierung eines Biegewerkzeuges zu bewerkstelligen.

In einer einfachen Ausführungsform kann die Biegemaschine eine erste Biegewerkzeughalterung umfassen. In einer erweiterten Ausführungsform kann die Biegewerkzeughalterung auch zwei oder mehrere erste Biegewerkzeughalterungen umfassen. Es ist insbesondere auch denkbar, dass eine erste Biegewerkzeughalterung von einer anderen ersten Biegehalterung getragen wird. Dabei könnte z.B. eine Biegewerkzeughalterung ausgebildet sein, eine Arbeitsbewegung zu vollbringen, während die andere Biegewerkzeughalterung zusätzlich dazu ausgebildet ist, eine Positionierbewegung von (zusätzlichen) Biegewerkzeugen - z.B. von einem peripheren Bereich der Biegemaschine in den Arbeitsbereich - zu ermöglichen. Während an der einen Biegewerkzeughalterung Biegewerkzeuge gehalten sind, können an der anderen Biegewerkzeughalterung andere, zusätzliche Biegewerkzeuge gehalten sein.

Die Vorteile der Erfindung sind u.a. aus folgendem Ausführungsbeispiel ersichtlich. Die (Schwenk)Biegemaschine kann dabei mit zwei Halterungen in der Biegewange für zusätzliche Biegewerkzeuge ausgestattet sein. Auf diesen Schlitten soll nun eine Schweißeinrichtung (insbesondere eine Punktschweißzange, die mittels Pneumatik gegen eine Blechkante gedrückt werden kann) platziert werden. In optimaler (geklemmter) Lage kann nun das Spaltmaß (für eine nach dem Biegen folgende Laserschweißung) auf einem Minimumwert mittels Punktschweißung fixiert werden.

Entsteht in der (Schwenk)Biegemaschine durch das Biegen einer (zweiten) Biegung ein Eckspalt, der später (laser)geschweißt werden soll, dann soll die erste Biegewerkzeughalterung (Biegewange) bzw. das von ihr gehaltene Biegewerkzeug den Blechschenkel der (zweiten) Biegung in optimaler Position (kleinster Schweißspalt) halten. Nun wird die integrierte Schweißeinrichtung, vorzugsweise eine Punktschweißzange, die z.B. an einer verfahrbaren Halterung (z.B. für zusätzliche Biegewerkzeuge) montiert ist, zum Eckspalt gefahren. Befindet sich der Eckspalt rechts außen, dann verwendet man eine von rechts heranfahrbare Halterung samt Schweißeinrichtung. Befindet sich der Eckspalt links außen, dann verwendet man eine von links heranfahrbare Halterung samt Schweißeinrichtung. Hat die jeweilige Halterung die richtige Position erreicht, dann kann die Schweißeinrichtung aktiviert werden (z.B. die Punktschweißzange pneumatisch geschlossen und die Punktschweißung durchgeführt werden). Ist ein zweiter Schweißpunkt weiter oben oder unten notwendig, dann kann die erste Biegewerkzeughalterung bzw. Biegewange eine Vollentlastung durchführen und anschließend die gewünschte Distanz nach oben bzw. unten fahren. Durch die solcherart erreichte "Stabilisierung" der Ecknahtvorbereitung (z.B. durch einen Schweißpunkt) ist das automatische Handling in der Laserschweißzelle mittels Halteroboter und Schweißroboter einfacher und kann ohne komplizierter Klemmeinrichtung umgesetzt werden.

Die erste Variante der Erfindung zeichnet sich dadurch aus, dass zumindest eine erste Biegewerkzeughalterung, welche eine Schweißeinrichtung trägt, quer zur Richtung ihrer Arbeitsbewegung verfahrbar gelagert ist. Eine bevorzugte Ausführungsform zeichnet sich dadurch aus, dass zumindest eine erste Biegewerkzeughalterung entlang der Biegelinie verfahrbar gelagert ist. Dies ermöglicht zusätzlich zur Arbeitsbewegung eine Positionierung von Biegewerkzeugen entlang des Werkstückes. Gleichzeitig kann durch diese Verfahrbarkeit die Schweißeinrichtung relativ zum Werkstück positioniert werden, um an der gewünschten Stelle einen Schweißvorgang durchzuführen.

An dieser Stelle sei erwähnt, dass die vorliegende Erfindung nicht auf Schwenkbiegemaschinen beschränkt ist, sondern dass die Biegemaschine z.B. auch in Form einer Biegepresse ausgebildet sein kann.

Eine bevorzugte Ausführungsform zeichnet sich dadurch aus, dass zumindest eine Schweißeinrichtung relativ zu der ersten Biegewerkzeughalterung, von der sie getragen ist, verfahrbar ist, vorzugsweise quer zur Richtung ihrer Arbeitsbewegung (d.h. quer zur Richtung der Arbeitsbewegung der ersten Biegewerkzeughalterung). Auch eine solche relative Verfahrbarkeit ermöglicht eine genaue Positionierung entlang des Werkstückes.

Die zweite Variante der Erfindung zeichnet sich dadurch aus, dass die zumindest eine Schweißeinrichtung von einer Halterung gehalten ist, die von einer ersten Biegewerkzeughalterung getragen und an dieser verfahrbar gelagert ist, vorzugsweise mittels zumindest einer Führungsschiene. Die - die Schweißeinrichtung tragende - Halterung ist vorzugsweise quer zur Arbeitsbewegung der ersten Biegewerkzeughalterung verfahrbar gelagert. Die Halterung ist dabei vorzugsweise von einer Parkposition und/oder einem peripheren Bereich der Biegemaschine in den Arbeitsbereich verfahrbar. Auf diese Weise kann die Schweißeinrichtung auf einfache Weise durch einen Antrieb der ersten Werkzeughalterung an die zu schweißende Werkstückstelle gefahren werden.

Die zweite Variante der Erfindung zeichnet sich weiters dadurch aus, dass die Halterung eine Biegewerkzeughalterung zum Halten zumindest eines Biegewerkzeuges ist. Die vorhergehend beschriebene Halterung kann somit zusätzliche Biegewerkzeuge halten bzw. tragen (z.B. für spezielle Biegevorgänge).

Eine bevorzugte Ausführungsform zeichnet sich dadurch aus, dass eine erste Schweißeinrichtung von einer ersten Halterung gehalten ist und eine zweite Schweißeinrichtung von einer zweiten Halterung gehalten ist, wobei die erste Halterung und die zweite Halterung an einer ersten Biegewerkzeughalterung verfahrbar gelagert sind, wobei vorzugsweise die erste Halterung und die zweite Halterung Biegewerkzeughalterungen zum Halten von Biegewerkzeugen sind. Die erste Halterung und die zweite Halterung sind vorzugsweise in einer Richtung quer - vorzugsweise senkrecht - zur Richtung der Arbeitsbewegung der Biegewerkzeughalterung(en) verfahrbar. Auf diese Weise können Schweißungen an verschiedenen Seiten des Werkstückes vorgenommen werden. So kann die erste Halterung von einer Seite (z.B. von rechts) und die zweite Halterung von der gegenüberliegenden Seite (z.B. von links) in den Arbeitsbereich (d.h. an das Werkstück heran) gefahren werden.

Eine bevorzugte Ausführungsform zeichnet sich dadurch aus, dass die Biegemaschine zumindest einen, vorzugsweise optischen, Sensor zur Erfassung einer, vorzugsweise geometrischen, Eigenschaft eines in der Biegemaschine befindlichen Werkstückes, insbesondere zur Erfassung eines Biegewinkels des Werkstückes und/oder einer auf das Werkzeug aufgebrachten Schweißstelle, aufweist. Dadurch kann die Qualität der durchgeführten Biegung (z.B. der Biegewinkel) und/oder der Schweißung überprüft werden.

Eine bevorzugte Ausführungsform zeichnet sich dadurch aus, dass der zumindest eine Sensor von derselben Halterung gehalten ist, die auch eine Schweißeinrichtung trägt, wobei vorzugsweise die Halterung, die den Sensor hält, eine Biegewerkzeughalterung zum Halten zumindest eines Biegewerkzeuges ist. Damit können sowohl die Schweißeinrichtung als auch der Sensor von derselben Halterung bewegt und positioniert werden.

Eine bevorzugte Ausführungsform zeichnet sich dadurch aus, dass eine erste Biegewerkzeughalterung durch einen länglichen Biegebalken gebildet ist, dessen Profil einen entlang der Längserstreckung des Biegebalkens verlaufenden Hohlraum bildet, wobei vorzugsweise der Hohlraum an einer Längsseite des Biegebalkens offen ist und/oder das den Hohlraum bildende Profil des Biegebalkens C-förmig ist. Dadurch kann nicht nur das Werkstück ausreichend in den Biegebalken hineinragen, sondern es ist darin auch Platz für Führungen, insbesondere Führungsschienen, und/oder weitere (Biegewerkzeug)Halterung(en) und/oder daran befestigte(n) Schweißeinrichtung(en).

Eine bevorzugte Ausführungsform zeichnet sich dadurch aus, dass die zumindest eine Schweißeinrichtung, vorzugsweise zur Gänze, in dem Hohlraum angeordnet ist und/oder durch den Hohlraum verfahrbar gelagert ist. Die Schweißeinrichtung kann auf diese Weise direkt zum Arbeitsbereich (Werkstück) gefahren werden und ist gleichzeitig im Hohlraum geschützt.

Eine bevorzugte Ausführungsform zeichnet sich dadurch aus, dass der Hohlraum an einer Seite durch zumindest ein von der ersten Biegewerkzeughalterung gehaltenes Biegewerkzeug und an den übrigen Seiten durch Wände begrenzt ist.

Eine bevorzugte Ausführungsform zeichnet sich dadurch aus, dass eine erste Biegewerkzeughalterung zumindest ein oberes Biegewerkzeug und zumindest ein unteres Biegewerkzeug trägt, wobei das zumindest eine obere Biegewerkzeug und das zumindest eine untere Biegewerkzeug einander gegenüberliegend angeordnet sind. Dadurch kann sowohl nach unten als auch nach oben gebogen werden.

Eine bevorzugte Ausführungsform zeichnet sich dadurch aus, dass die Biegemaschine zumindest eine zweite Biegewerkzeughalterung zum Halten zumindest eines Biegewerkzeuges, insbesondere eines Klemmwerkzeuges zum Klemmen des Werkstückes, umfasst, wobei zur Durchführung einer Arbeitsbewegung die zumindest eine erste Biegewerkzeughalterung relativ zu der zumindest einen zweiten Biegewerkzeughalterung bewegbar ist, und/oder dass die Biegemaschine zumindest zwei, relativ zueinander bewegbare zweite Biegewerkzeughalterungen zum Klemmen eines Werkstückes aufweist, wobei eine der zweiten Biegewerkzeughalterungen in Form eines oberen Klemmbalkens zum Halten eines oberen Klemmwerkzeuges und eine andere der zweiten Biegewerkzeughalterungen in Form eines unteren Klemmbalkens zum Halten eines unteren Klemmwerkzeuges ausgebildet ist. Die zweite Biegewerkzeughalterung kann durch einen Antrieb antreibbar sein, um das Werkstück zu halten (bzw. zu klemmen).

Im Falle einer Schwenkbiegemaschine kann die zweite Biegewerkzeughalterung eine Klemmung bzw. Fixierung für das zu biegende (und anschließend zu schweißende) Werkstück sein. Im Fall einer Biegepresse mit zwei, aufeinander zu bewegbaren Biegewerkzeugen (insbesondere Stempelwerkzeug und Matrizenwerkzeug) dient die erste Biegewerkzeughalterung zum Halten des einen Beigewerkzeuges und die zweite Biegewerkzeughalterung zum Halten des anderen Biegewerkzeuges (bzw. können natürlich auch mehrere Biegewerkzeuge vorgesehen sein).

Eine bevorzugte Ausführungsform zeichnet sich dadurch aus, dass die Schweißeinrichtung eine Widerstandsschweißeinrichtung und/oder Elektroschweißeinrichtung und/oder Laserschweißeinrichtung und/oder Lichtbogenschweißeinrichtung ist. Insbesondere mit einer Widerstands- oder Elektroschweißeinrichtung kann eine sehr kostengünstige, zuverlässige und platzsparende Lösung erreicht werden, die sich u.a. vor allem für Punktschweißstellen besonders gut eignet. Da die in der Biegemaschine durchgeführten Schweißverbindungen meistens nur provisorischer Natur sind und Haltefunktion haben (d.h. Werkstückabschnitte zueinander fixieren, bis in einer Schweißstation die vollständige Schweißnaht erzeugt wird), reichen Punktschweißungen meistens aus, um ein "Zurückbiegen" (und somit ein Vergrößerung des Spalts) zu verhindern.

Eine bevorzugte Ausführungsform zeichnet sich dadurch aus, dass die Schweißeinrichtung ein ausfahrbares Schweißwerkzeug und/oder ein Schweißwerkzeug aus zumindest zwei zueinander bewegbaren Elementen, vorzugsweise in Form einer Schweißzange, umfasst, wobei vorzugsweise das Schweißwerkzeug pneumatisch und/oder hydraulisch und/oder mechanisch und/oder elektrisch betätigbar ist. Dies ermöglich einerseits eine genaue Positionierung, sodass die Schweißverbindung an der gewünschten Position erzeugt werden kann, und andererseits eine Positionswahrung bzw. Fixierung (z.B. Zange) während des Schweißvorganges selbst.

Eine bevorzugte Ausführungsform zeichnet sich dadurch aus, dass die Biegemaschine eine Steuereinrichtung zur Steuerung der Arbeitsbewegung der zumindest einen ersten Biegewerkzeughalterung und/oder zur Positionierung eines Biegewerkzeuges mittels der zumindest einen ersten Biegewerkzeughalterung aufweist, wobei die Steuereinrichtung mit der Schweißeinrichtung zur Steuerung eines Schweißvorganges verbunden ist.

Die Aufgabe wird auch gelöst mit einem Verfahren zum Biegen eines Werkstückes mit einer, insbesondere erfindungsgemäßen Biegemaschine, wobei an einem Werkstück - mittels einer ersten Biegewerkzeughalterung und zumindest einem daran gehaltenen Biegewerkzeug - ein Biegevorgang durchgeführt wird und wobei nach dem Biegevorgang mittels der Schweißeinrichtung zumindest eine Schweißverbindung, insbesondere ein Schweißpunkt und/oder eine Schweißnaht, zwischen zwei aufeinander zu gebogenen Abschnitten des Werkstückes hergestellt wird.

Zum besseren Verständnis der Erfindung wird diese anhand der nachfolgenden Figuren näher erläutert.

Es zeigen jeweils in stark vereinfachter, schematischer Darstellung:
- Fig. 1: eine erfindungsgemäße Schwenkbiegemaschine;
- Fig. 2: die ersten Biegewerkzeughalterungen der Schwenkbiegemaschine von vorne;
- Fig. 3: eine erfindungsgemäße Biegemaschine in Form einer Biegepresse;
- Fig. 4: die Biegemaschine aus Fig. 3 in seitlicher Ansicht;
- Fig. 5: die Schweißeinrichtung mit ausfahrbarem bzw. bewegbarem Schweißwerkzeug, und
- Fig. 6: die einzelnen Schritte eines erfindungsgemäßen Verfahrens, mit dem Biegevorgang und anschließendem Schweißvorgang.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist.

Der Schutzbereich ist durch die Ansprüche bestimmt. Die Beschreibung und die Zeichnungen sind jedoch zur Auslegung der Ansprüche heranzuziehen.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

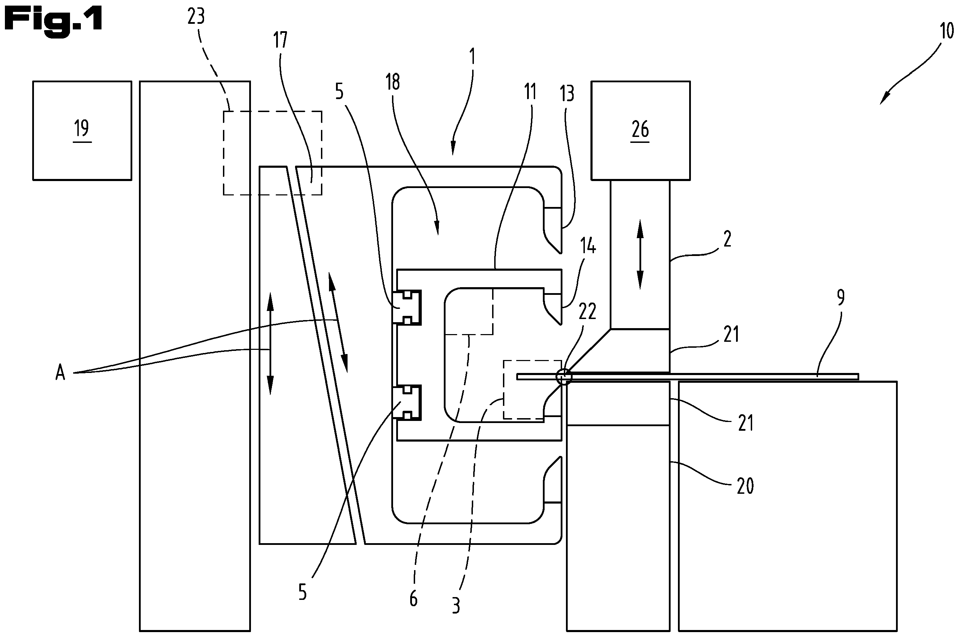

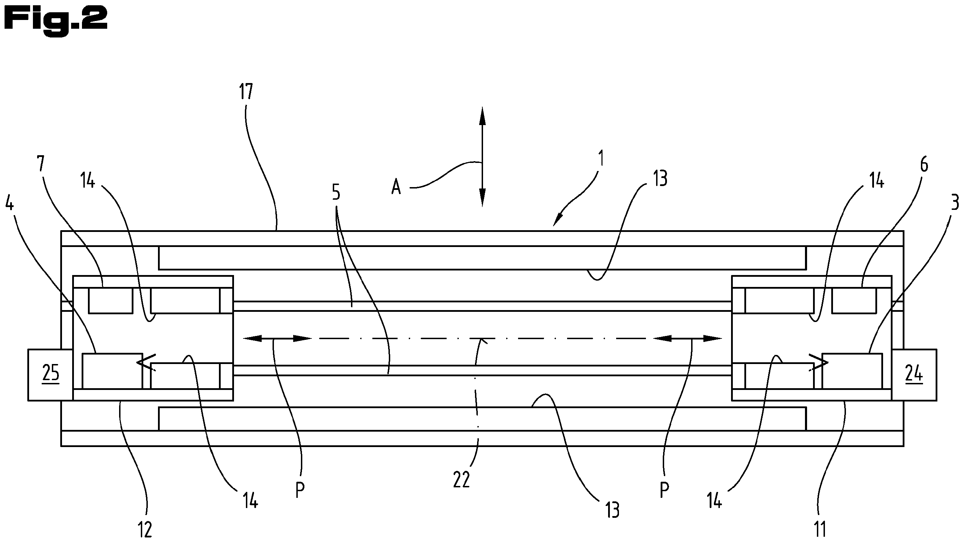

Fig. 1 und 2 zeigen eine Biegemaschine 10 in Form einer Schwenkbiegemaschine, zum Biegen eines Werkstückes 9, welches zu diesem Zweck auf einer Plattform, z.B. einem Tisch, gelagert und geklemmt gehalten sein kann.

Die Biegemaschine 10 umfasst erste Biegewerkzeughalterungen 1, 11, 12, die zur Ausführung einer Arbeitsbewegung A und/oder zur Positionierung P eines Biegewerkzeuges 13, 14 - an einem Gestell, insbesondere einem Rahmen, der Biegemaschine 10 - bewegbar gelagert sind.

Die Biegemaschine 10 umfasst auch Schweißeinrichtungen 3, 4, insbesondere Punktschweißeinrichtung, zum Schweißen eines in der Biegemaschine 10 gebogenen Werkstückes 9. Die Schweißeinrichtungen 3, 4 sind jeweils von einer ersten Biegewerkzeughalterung 1, 11, 12 getragen. Im dargestellten Ausführungsbeispiel werden die Schweißeinrichtungen 3, 4 von der Biegewerkzeughalterung 1 (zur Ausführung einer Arbeitsbewegung A) und jeweils von einer Biegewerkzeughalterung 11, 12 (zur Ausführung einer Arbeitsbewegung A und zur Positionierung P der Biegewerkzeuge 14) gehalten. Die seitlich verfahrbaren (kleineren) Biegewerkzeughalterungen 11, 12 werden wiederum von der (großen) Biegewerkzeughalterung 1 getragen. Die große oder Haupt- Biegewerkzeughalterung 1 hält Biegewerkzeuge 13. Die kleineren Biegewerkzeughalterungen 11, 12 halten zusätzliche Biegewerkzeuge 14.

Die erste(n) Biegewerkzeughalterung(en) 1, 11, 12 sind durch (zumindest) einen Antrieb 23 antreibbar, um die Arbeitsbewegung(en) A zu vollführen. Die Arbeitsbewegung(en) kann/können z.B. linear sein. Es können - wie in Fig. 2 durch die beiden Doppelpfeile angedeutet - auch zwei (zusammengesetzte bzw. überlagerte) Arbeitsbewegungen A vollführt werden. In einer alternativen - nicht dargestellten - Ausführungsform könnte die Arbeitsbewegung auch eine Rotation umfassen.

Die erste(n) Biegewerkzeughalterung(en) 11, 12 sind jeweils durch einen Verfahrantrieb 24, 25 antreibbar, um die Positionierung P eines Biegewerkzeuges 14 zu bewerkstelligen.

Die - weiter unten näher beschriebene - zweite Biegewerkzeughalterung 2 ist durch einen Antrieb 26 antreibbar, um das Werkstück 9 zu halten (bzw. zu klemmen).

Wie aus Fig. 2 ersichtlich sind die (zusätzlichen) Biegewerkzeughalterungen 11, 12 quer zur Richtung ihrer Arbeitsbewegung A verfahrbar gelagert. In vorliegendem Beispiel bedeutet dies gleichzeitig, dass die Biegewerkzeughalterungen 11, 12 entlang der Biegelinie 22 verfahrbar gelagert sind. Die Biegelinie ist jene Linie, um die das Werkstück 9 während eines Biegevorganges in der Biegemaschine 10 gebogen bzw. gefaltet wird.

In einer alternativen Ausführungsform ist es nicht unbedingt erforderlich zusätzliche erste Biegewerkzeughalterungen 11, 12 vorzusehen. Die Schweißeinrichtung(en) könnte(n) - auch ohne zusätzliche erste Biegewerkzeughalterungen 11, 12 - relativ zu der ersten Biegewerkzeughalterung 1, von der sie getragen ist/sind, verfahrbar sein, vorzugsweise quer zur Richtung ihrer Arbeitsbewegung A.

Die zumindest eine Schweißeinrichtung 3 kann dabei von einer Halterung 11, 12 gehalten sein, die von der ersten Biegewerkzeughalterung 1 getragen und an dieser verfahrbar gelagert ist, vorzugsweise mittels zumindest einer Führungsschiene 5. In der bevorzugten Ausführungsform der Fig. 1 und 2 sind die Halterungen 11, 12 eben eine Biegewerkzeughalterungen zum Halten zumindest eines Biegewerkzeuges 14.

Wie aus Fig. 2 ersichtlich kann eine erste Schweißeinrichtung 3 von einer ersten Halterung 11 gehalten sein und eine zweite Schweißeinrichtung 4 von einer zweiten Halterung 12 gehalten sein, wobei die erste Halterung 11 und die zweite Halterung 12 an einer ersten Biegewerkzeughalterung 1 verfahrbar gelagert sind. Wie bereits erwähnt ist es bevorzugt, wenn die erste Halterung 11 und die zweite Halterung 12 gleichzeitig auch Biegewerkzeughalterungen zum Halten von (zusätzlichen) Biegewerkzeugen 14 sind.

Die Biegemaschine 10 kann auch zumindest einen, vorzugsweise optischen, Sensor 6, 7 zur Erfassung einer, vorzugsweise geometrischen, Eigenschaft eines in der Biegemaschine 10 befindlichen Werkstückes 9, insbesondere zur Erfassung eines Biegewinkels des Werkstückes 9 und/oder einer auf das Werkzeug 9 aufgebrachten Schweißstelle 8, aufweisen (siehe Fig. 2).

Der zumindest eine Sensor 6, 7 kann dabei von derselben Halterung 11, 12 gehalten sein, die auch eine Schweißeinrichtung 3, 4 trägt. Wie bereits mehrfach erwähnt kann die Halterung 11, 12, die den Sensor 6, 7 hält, gleichzeitig eine Biegewerkzeughalterung zum Halten zumindest eines Biegewerkzeuges 14 sein.

Eine erste Biegewerkzeughalterung 1 kann durch einen länglichen Biegebalken 17 gebildet sein, dessen Profil einen entlang der Längserstreckung des Biegebalkens verlaufenden Hohlraum 18 bildet (siehe Fig. 1 und 2). Vorzugsweise ist der Hohlraum 18 an einer Längsseite des Biegebalkens 17 offen. Das den Hohlraum 18 bildende Profil des Biegebalkens 17 kann C-förmig sein (Fig. 1). Der Hohlraum 18 ist an einer Seite durch zumindest ein von der ersten Biegewerkzeughalterung 1 gehaltenes Biegewerkzeug 13 und an den übrigen Seiten durch Wände begrenzt.

Die zumindest eine Schweißeinrichtung 3, 4 kann, vorzugsweise zur Gänze, in dem Hohlraum 18 angeordnet sein und/oder durch den Hohlraum 18 verfahrbar gelagert sein (Fig. 1).

Wie aus den Fig. 1 und 2 zu sehen trägt/-en die erste(n) Biegewerkzeughalterung(en) 1, 11, 12 zumindest ein oberes Biegewerkzeug 13, 14 und zumindest ein unteres Biegewerkzeug 13, 14, wobei das zumindest eine obere Biegewerkzeug 13, 14 und das zumindest eine untere Biegewerkzeug 13, 14 einander gegenüberliegend angeordnet sind.

Die Biegemaschine 10 aus Fig. 1 umfasst auch zweite Biegewerkzeughalterungen 2, 20 zum Halten zumindest eines Biegewerkzeuges 21, insbesondere eines Klemmwerkzeuges zum Klemmen eines Werkstückes 9. Zur Durchführung einer Arbeitsbewegung A ist die zumindest eine erste Biegewerkzeughalterung 1, 11, 12 relativ zu den zweiten Biegewerkzeughalterungen 2, 20 bewegbar. Zum Halten des Werkstückes kann selbstverständlich auch nur eine zweite Biegewerkzeughalterung vorgesehen sein, welche z.B. das Werkstück zwischengegen eine Plattform drückt

In der Ausführungsform gemäß Fig. 1 weist die Biegemaschine 10 zwei, relativ zueinander bewegbare zweite Biegewerkzeughalterungen 2, 20 zum Klemmen eines Werkstückes 9 auf, wobei eine 2 der zweiten Biegewerkzeughalterungen in Form eines oberen Klemmbalkens zum Halten eines oberen Klemmwerkzeuges und eine andere 20 der zweiten Biegewerkzeughalterungen in Form eines unteren Klemmbalkens zum Halten eines unteren Klemmwerkzeuges ausgebildet ist.

Die Schweißeinrichtung(en) 3, 4 können eine Widerstandsschweißeinrichtung und/oder Elektroschweißeinrichtung und/oder Laserschweißeinrichtung und/oder Lichtbogenschweißeinrichtung sein.

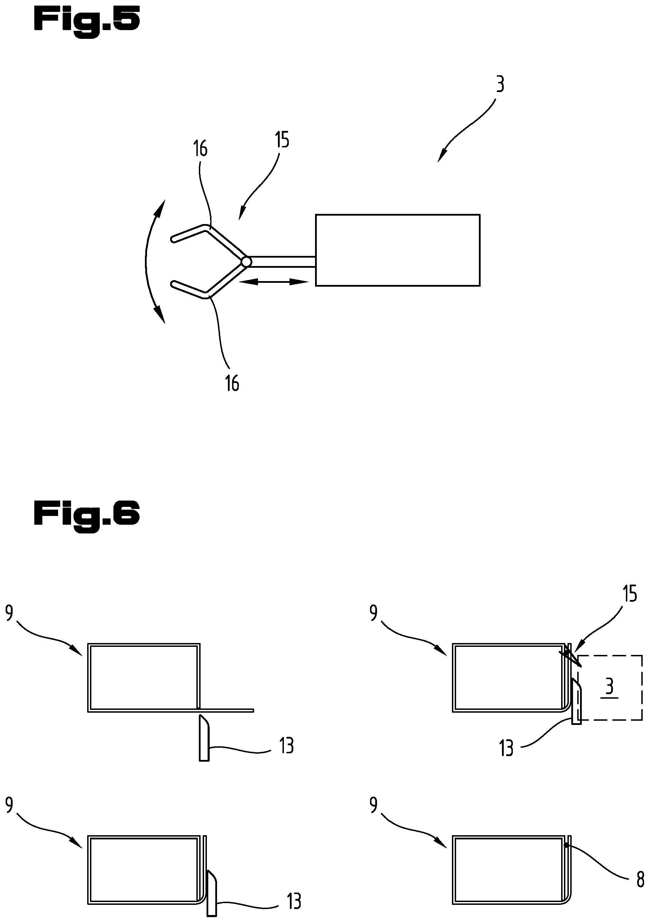

Die Schweißeinrichtung 3, 4 kann ein ausfahrbares Schweißwerkzeug 15 (siehe gerader Doppelpfeil in Fig. 5) und/oder ein Schweißwerkzeug 15 aus zumindest zwei zueinander bewegbaren Elementen 16, vorzugsweise in Form einer Schweißzange, umfassen (siehe gebogenen Doppelpfeil in Fig. 5). Das Schweißwerkzeug 15 kann pneumatisch und/oder hydraulisch und/oder mechanisch und/oder elektrisch betätigbar sein.

Gemäß der Ausführungsform aus Fig. 1 weist die Biegemaschine 10 eine Steuereinrichtung 19 zur Steuerung der Arbeitsbewegung A der zumindest einen ersten Biegewerkzeughalterung 1, 11, 12 und/oder zur Positionierung P eines Biegewerkzeuges 13, 14 mittels der zumindest einen ersten Biegewerkzeughalterung 1, 11, 12 auf. Die Steuereinrichtung 19 ist mit der Schweißeinrichtung 3, 4 zur Steuerung eines Schweißvorganges verbunden (diese Verbindung ist der Übersichtlichkeit wegen nicht dargestellt).

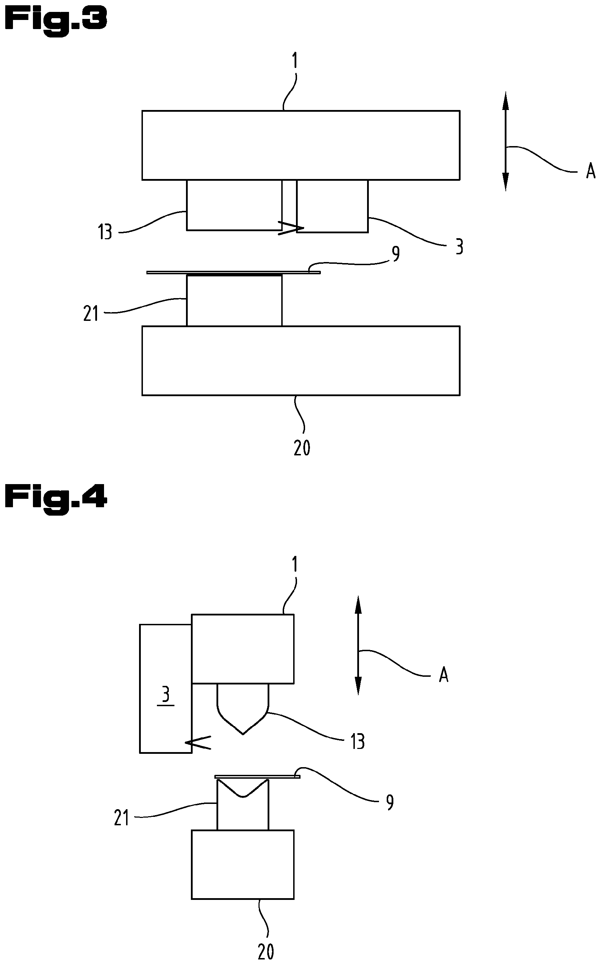

Die Fig. 3 und 4 verdeutlichen, dass die Erfindung auch auf Biegemaschinen, die in Form einer Biegepresse ausgebildet sind, anwendbar ist. Die Schweißeinrichtung 3 ist dabei ebenfalls von einer ersten Biegewerkzeughalterung 1, die zur Ausführung einer Arbeitsbewegung A bewegbar gelagert ist, gehalten. Das Schweißwerkzeug 15 kann dabei ebenfalls ausfahrbar sein (siehe Fig. 5) oder aus zumindest zwei zueinander bewegbaren Elementen 16, vorzugsweise in Form einer Schweißzange, gebildet sein. Auch können die anderen - im Zusammenhang mit der Schwenkbiegepresse beschriebenen Merkmale - auf eine Biegepresse übertragen werden.

Schließlich betrifft die Erfindung auch ein Verfahren zum Biegen eines Werkstückes 9, insbesondere eines Blechstückes, in einer Biegemaschine 10. Dabei wird an einem Werkstück 9 - mittels einer ersten Biegewerkzeughalterung 1, 11, 12 und zumindest einem daran gehaltenen Biegewerkzeug 13, 14 - ein Biegevorgang durchgeführt (siehe Abfolge in Fig. 6). Nach dem Biegevorgang wird mittels einer Schweißeinrichtung 3, 4 zumindest eine Schweißstelle 8, insbesondere ein Schweißpunkt und/oder eine Schweißnaht, zwischen zwei aufeinander zu gebogenen Abschnitten des Werkstückes 9 hergestellt.

Wie bereits eingangs erwähnt eignet sich die vorliegende Erfindung insbesondere zur provisorischen Fixierung von Eckspalten. Entsteht in der (Schwenk)Biegemaschine durch das Biegen einer (zweiten) Biegung ein Eckspalt (siehe zweite Abbildung der Fig. 6), der später (laser)geschweißt werden soll, dann soll die erste Biegewerkzeughalterung 1 bzw. das von ihr gehaltene Biegewerkzeug 13 den Blechschenkel der (zweiten) Biegung in optimaler Position (kleinster Schweißspalt) halten. Nun wird die integrierte Schweißeinrichtung, vorzugsweise eine Punktschweißzange, die z.B. an einer verfahrbaren Halterung (z.B. für zusätzliche Biegewerkzeuge) montiert ist, zum Eckspalt gefahren (siehe dritte Abbildung in Fig. 6). Die Schweißeinrichtung 3 wird anschließend aktiviert (z.B. die Punktschweißzange wird pneumatisch geschlossen und die Punktschweißung durchgeführt), wodurch ein vorbereitetes Werkstück 9 (siehe letzte Abbildung in Fig. 6) entsteht, welches für die Weiterverarbeitung (Schweißen einer vollständigen Schweißnaht entlang des Eckspaltes) bereitgestellt wird.

### Bezugszeichenaufstellung

- 1: erste Biegewerkzeughalterung
- 2: zweite Biegewerkzeughalterung
- 3: Schweißeinrichtung
- 4: Schweißeinrichtung
- 5: Führungsschiene
- 6: Sensor
- 7: Sensor
- 8: Schweißstelle
- 9: Werkstück
- 10: Biegemaschine
- 11: erste Biegewerkzeughalterung
- 12: erste Biegewerkzeughalterung
- 13: Biegewerkzeug
- 14: Biegewerkzeug
- 15: Schweißwerkzeug
- 16: Element des Schweißwerkzeuges
- 17: Biegebalken
- 18: Hohlraum
- 19: Steuereinrichtung
- 20: zweite Biegewerkzeughalterung
- 21: Biegewerkzeug
- 22: Biegelinie
- 23: Antrieb für die Arbeitsbewegung A
- 24: Verfahrantrieb der Halterung 11
- 25: Verfahrantrieb der Halterung 12
- 26: Antrieb der zweiten Biegewerkzeughalrung 20

## Patentansprüche

1. Biegemaschine (10), insbesondere Schwenkbiegemaschine, zum Biegen eines Werkstückes (9), umfassend
- zumindest eine erste Biegewerkzeughalterung (1, 11, 12), die zur Ausführung einer Arbeitsbewegung (A) und/oder zur Positionierung (P) eines Biegewerkzeuges (13, 14) bewegbar gelagert ist, und
- zumindest eine Schweißeinrichtung (3, 4), insbesondere Punktschweißeinrichtung, zum Schweißen eines in der Biegemaschine (10) gebogenen Werkstückes (9),
wobei die zumindest eine Schweißeinrichtung (3, 4) von der zumindest einen ersten Biegewerkzeughalterung (1, 11, 12) getragen ist, und wobei die erste(n) Biegewerkzeughalterung(en) (11, 12) durch zumindest einen Antrieb antreibbar ist/sind, um die Arbeitsbewegung(en) (A), die den Biegevorgang bewirkt/-en, zu vollführen,
**dadurch gekennzeichnet,**
**dass** die zumindest eine erste Biegewerkzeughalterung (11, 12), welche eine Schweißeinrichtung (3, 4) trägt, quer zur Richtung ihrer Arbeitsbewegung (A) entlang der Biegelinie (22) verfahrbar gelagert ist
**und/oder**
**dass** die erste Biegewerkzeughalterung (11, 12), welche eine Schweißeinrichtung (3, 4) trägt, von einer weiteren ersten Biegewerkzeughalterung (1) getragen und an dieser verfahrbar gelagert ist, vorzugsweise mittels zumindest einer Führungsschiene (5).

2. Biegemaschine nach Anspruch 1, **dadurch gekennzeichnet, dass** zumindest eine erste Biegewerkzeughalterung (11, 12) entlang der Biegelinie (22) verfahrbar gelagert ist.

3. Biegemaschine nach Anspruch 1 oder 2, **dadurch gekennzeichnet, dass** zumindest eine Schweißeinrichtung (3, 4) relativ zu der ersten Biegewerkzeughalterung (1), von der sie getragen ist, verfahrbar ist, vorzugsweise quer zur Richtung ihrer Arbeitsbewegung (A).

4. Biegemaschine nach einem der vorhergehenden Ansprüche, **dadurch gekennzeichnet, dass** die - die Schweißeinrichtung (3, 4) tragende - erste Biegewerkzeughalterung (11, 12) quer zur Arbeitsbewegung der weiteren ersten Biegewerkzeughalterung (1) verfahrbar gelagert ist.

5. Biegemaschine nach einem der vorhergehenden Ansprüche, **dadurch gekennzeichnet, dass** eine erste Schweißeinrichtung (3) von einer ersten Halterung (11) gehalten ist und eine zweite Schweißeinrichtung (4) von einer zweiten Halterung (12) gehalten ist, wobei die erste Halterung (11) und die zweite Halterung (12) an einer weiteren ersten Biegewerkzeughalterung (1) verfahrbar gelagert sind, wobei vorzugsweise die erste Halterung (11) und die zweite Halterung (12) Biegewerkzeughalterungen zum Halten von Biegewerkzeugen (14) sind.

6. Biegemaschine nach einem der vorhergehenden Ansprüche, **dadurch gekennzeichnet, dass** die Biegemaschine (10) zumindest einen, vorzugsweise optischen, Sensor (6, 7) zur Erfassung einer, vorzugsweise geometrischen, Eigenschaft eines in der Biegemaschine (10) befindlichen Werkstückes (9), insbesondere zur Erfassung eines Biegewinkels des Werkstückes (9) und/oder einer auf das Werkzeug (9) aufgebrachten Schweißstelle (8), aufweist.

7. Biegemaschine nach Anspruch 6, **dadurch gekennzeichnet, dass** der zumindest eine Sensor (6, 7) von derselben Halterung (11, 12) gehalten ist, die auch eine Schweißeinrichtung (3, 4) trägt, wobei vorzugsweise die Halterung (11, 12), die den Sensor (6, 7) hält, eine Biegewerkzeughalterung zum Halten zumindest eines Biegewerkzeuges (14) ist.

8. Biegemaschine nach einem der vorhergehenden Ansprüche, **dadurch gekennzeichnet, dass** eine erste Biegewerkzeughalterung (1) durch einen länglichen Biegebalken (17) gebildet ist, dessen Profil einen entlang der Längserstreckung des Biegebalkens verlaufenden Hohlraum (18) bildet, wobei vorzugsweise der Hohlraum (18) an einer Längsseite des Biegebalkens (17) offen ist und/oder das den Hohlraum (18) bildende Profil des Biegebalkens (17) C-förmig ist.

9. Biegemaschine nach Anspruch 8, **dadurch gekennzeichnet, dass** die zumindest eine Schweißeinrichtung (3, 4), vorzugsweise zur Gänze, in dem Hohlraum (18) angeordnet ist und/oder durch den Hohlraum (18) verfahrbar gelagert ist.

10. Biegemaschine nach Anspruch 8 oder 9, **dadurch gekennzeichnet, dass** der Hohlraum (18) an einer Seite durch zumindest ein von der ersten Biegewerkzeughalterung (1) gehaltenes Biegewerkzeug (13) und an den übrigen Seiten durch Wände begrenzt ist.

11. Biegemaschine nach einem der vorhergehenden Ansprüche, **dadurch gekennzeichnet, dass** eine erste Biegewerkzeughalterung (1, 11, 12) zumindest ein oberes Biegewerkzeug (13, 14) und zumindest ein unteres Biegewerkzeug (13, 14) trägt, wobei das zumindest eine obere Biegewerkzeug (13, 14) und das zumindest eine untere Biegewerkzeug (13, 14) einander gegenüberliegend angeordnet sind.

12. Biegemaschine nach einem der vorhergehenden Ansprüche, **dadurch gekennzeichnet, dass** die Biegemaschine (10) zumindest eine zweite Biegewerkzeughalterung (2, 20) zum Halten zumindest eines Biegewerkzeuges (21), insbesondere eines Klemmwerkzeuges zum Klemmen eines Werkstückes (9), umfasst, wobei zur Durchführung einer Arbeitsbewegung (A) die zumindest eine erste Biegewerkzeughalterung (1, 11, 12) relativ zu der zumindest einen zweiten Biegewerkzeughalterung (2, 20) bewegbar ist, und/oder dass die Biegemaschine (10) zumindest zwei, relativ zueinander bewegbare zweite Biegewerkzeughalterungen (2, 20) zum Klemmen eines Werkstückes (9) aufweist, wobei eine (2) der zweiten Biegewerkzeughalterungen in Form eines oberen Klemmbalkens zum Halten eines oberen Klemmwerkzeuges und eine andere (20) der zweiten Biegewerkzeughalterungen in Form eines unteren Klemmbalkens zum Halten eines unteren Klemmwerkzeuges ausgebildet ist.

13. Biegemaschine nach einem der vorhergehenden Ansprüche, **dadurch gekennzeichnet, dass** die zumindest eine Schweißeinrichtung (3, 4) eine Widerstandsschweißeinrichtung und/oder Elektroschweißeinrichtung und/oder Laserschweißeinrichtung und/oder Lichtbogenschweißeinrichtung ist.

14. Biegemaschine nach einem der vorhergehenden Ansprüche, **dadurch gekennzeichnet, dass** die zumindest eine Schweißeinrichtung (3, 4) ein ausfahrbares Schweißwerkzeug (15) und/oder ein Schweißwerkzeug (15) aus zumindest zwei zueinander bewegbaren Elementen (16), vorzugsweise in Form einer Schweißzange, umfasst, wobei vorzugsweise das Schweißwerkzeug (15) pneumatisch und/oder hydraulisch und/oder mechanisch und/oder elektrisch betätigbar ist.

15. Biegemaschine nach einem der vorhergehenden Ansprüche, **dadurch gekennzeichnet, dass** die Biegemaschine (10) eine Steuereinrichtung (19) zur Steuerung der Arbeitsbewegung (A) der zumindest einen ersten Biegewerkzeughalterung (1, 11, 12) und/oder zur Positionierung (P) eines Biegewerkzeuges (13, 14) mittels der zumindest einen ersten Biegewerkzeughalterung (1, 11, 12) aufweist, wobei die Steuereinrichtung (19) mit der Schweißeinrichtung (3, 4) zur Steuerung eines Schweißvorganges verbunden ist.

16. Verfahren zum Biegen eines Werkstückes (9), insbesondere eines Blechstückes, mit einer Biegemaschine (10) nach einem der Ansprüche 1 bis 15, **dadurch gekennzeichnet, dass** an einem Werkstück (9) - mittels einer ersten Biegewerkzeughalterung (1, 11, 12) und zumindest einem daran gehaltenen Biegewerkzeug (13, 14) - ein Biegevorgang durchgeführt wird und dass nach dem Biegevorgang mittels einer Schweißeinrichtung (3, 4) zumindest eine Schweißstelle (8), insbesondere ein Schweißpunkt und/oder eine Schweißnaht, zwischen zwei aufeinander zu gebogenen Abschnitten des Werkstückes (9) hergestellt wird.

## Claims

1. A bending machine (10), in particular a swivel bending machine, for bending a workpiece (9), comprising
- at least one first bending tool holder (1, 11, 12), which is movably mounted for executing a working movement (A) and/or for positioning (P) a bending tool (13, 14), and
- at least one welding device (3, 4), in particular a spot welding device, for welding a workpiece (9) bent in the bending machine (10),
wherein the at least one welding device (3, 4) is supported by the at least one first bending tool holder (1, 11, 12), and wherein the first bending tool holder(s) (11, 12) is/are drivable by at least one drive in order to perform the working movement(s) (A) which cause(s) the bending operation,
**characterized in**
**that** the at least one first bending tool holder (11, 12), which carries a welding device (3, 4), is mounted so as to be movable transversely to the direction of its working movement (A) along the bending line (22),
and/or
**that** the first bending tool holder (11, 12), which carries a welding device (3, 4), is carried by a further first bending tool holder (1) and is mounted thereon so as to be movable, preferably by means of at least one guide rail (5).

2. The bending machine according to claim 1, **characterized in that** at least one first bending tool holder (11, 12) is mounted so as to be movable along the bending line (22).

3. The bending machine according to claim 1 or 2, **characterized in that** at least one welding device (3, 4) is movable relative to the first bending tool holder (1) by which it is carried, preferably transversely to the direction of its working movement (A).

4. The bending machine according to one of the preceding claims, **characterized in that** the first bending tool holder (11, 12) - carrying the welding device (3, 4) - is mounted so as to be movable transversely to the working movement of the further first bending tool holder (1).

5. The bending machine according to one of the preceding claims, **characterized in that** a first welding device (3) is held by a first holder (11) and a second welding device (4) is held by a second holder (12), wherein the first holder (11) and the second holder (12) are movably mounted on a further first bending tool holder (1), wherein preferably the first holder (11) and the second holder (12) are bending tool holders for holding bending tools (14).

6. The bending machine according to one of the preceding claims, **characterized in that** the bending machine (10) has at least one, preferably optical, sensor (6, 7) for detecting a, preferably geometric, property of a workpiece (9) located in the bending machine (10), in particular for detecting a bending angle of the workpiece (9) and/or a welding location (8) applied to the tool (9).

7. The bending machine according to claim 6, **characterized in that** the at least one sensor (6, 7) is held by the same holder (11, 12) which also carries a welding device (3, 4), wherein preferably the holder (11, 12) which holds the sensor (6, 7) is a bending tool holder for holding at least one bending tool (14).

8. The bending machine according to one of the preceding claims, **characterized in that** a first bending tool holder (1) is formed by an elongate bending beam (17), the profile of which forms a cavity (18) extending along the longitudinal extent of the bending beam, wherein preferably the cavity (18) is open on one longitudinal side of the bending beam (17) and/or the profile of the bending beam (17) forming the cavity (18) is C-shaped.

9. The bending machine according to claim 8, **characterized in that** the at least one welding device (3, 4) is arranged, preferably in its entirety, in the cavity (18) and/or is mounted so as to be movable through the cavity (18).

10. The bending machine according to claim 8 or 9, **characterized in that** the cavity (18) is bounded on one side by at least one bending tool (13) held by the first bending tool holder (1) and on the other sides by walls.

11. The bending machine according to one of the preceding claims, **characterized in that** a first bending tool holder (1, 11, 12) carries at least one upper bending tool (13, 14) and at least one lower bending tool (13, 14), wherein the at least one upper bending tool (13, 14) and the at least one lower bending tool (13, 14) are arranged opposite one another.

12. The bending machine according to one of the preceding claims, **characterized in that** the bending machine (10) comprises at least one second bending tool holder (2, 20) for holding at least one bending tool (21), in particular a clamping tool for clamping a workpiece (9), wherein the at least one first bending tool holder (1, 11, 12) is movable relative to the at least one second bending tool holder (2, 20) for carrying out a working movement (A), and/or that the bending machine (10) has at least two second bending tool holders (2, 20), which can be moved relative to one another, for clamping a workpiece (9), wherein one (2) of the second bending tool holders is configured in the form of an upper clamping beam for holding an upper clamping tool and another (20) of the second bending tool holders is configured in the form of a lower clamping beam for holding a lower clamping tool.

13. The bending machine according to one of the preceding claims, **characterized in that** the at least one welding device (3, 4) is a resistance welding device and/or electric welding device and/or laser welding device and/or arc welding device.

14. The bending machine according to one of the preceding claims, **characterized in that** the at least one welding device (3, 4) comprises an extendable welding tool (15) and/or a welding tool (15) comprising at least two elements (16) movable relative to one another, preferably in the form of welding tongs, wherein preferably the welding tool (15) is actuable pneumatically and/or hydraulically and/or mechanically and/or electrically.

15. The bending machine according to one of the preceding claims, **characterized in that** the bending machine (10) has a controller (19) for controlling the working movement (A) of the at least one first bending tool holder (1, 11, 12) and/or for positioning (P) a bending tool (13, 14) by means of the at least one first bending tool holder (1, 11, 12), wherein the controller (19) is connected to the welding device (3, 4) for controlling a welding operation.

16. A method for bending a workpiece (9), in particular a piece of sheet metal, with a bending machine (10) according to one of claims 1 to 15, **characterized in that** a bending operation is carried out on a workpiece (9) - by means of a first bending tool holder (1, 11, 12) and at least one bending tool (13, 14) held thereon - and that after the bending operation by means of a welding device (3, 4), at least one welding location (8), in particular a weld spot and/or a weld seam, is produced between two sections of the workpiece (9) which are bent towards each other.

## Revendications

1. Machine de cintrage (10), plus particulièrement machine de cintrage pivotante, pour le cintrage d'une pièce (9), comprenant
- au moins un premier support d'outil de cintrage (1, 11, 12) qui est logé de manière mobile pour l'exécution d'un mouvement de travail (A) et/ou pour le positionnement (P) d'un outil de cintrage (13, 14) et
- au moins un dispositif de soudage (3, 4), plus particulièrement un dispositif de soudage par points pour le soudage d'une pièce (9) contrée dans la machine de cintrage (10), dans laquelle l'au moins un dispositif de soudage (3, 4) est supporté par l'au moins un premier support d'outil de cintrage (1, 11, 12) et dans laquelle le ou les premiers supports d'outils de cintrage (11, 12) peuvent être entraînés par au moins un dispositif d'entraînement, afin d'effectuer le ou les mouvements de travail (A) qui produisent le processus de cintrage,
**caractérisée en ce que**
l'au moins un premier support d'outil de cintrage (11, 12) qui supporte un dispositif de soudage (3, 4), est logé de manière mobile transversalement par rapport à la direction de son mouvement de travail (A) le long de la ligne de cintrage (22)
et/ou
le premier support d'outil de cintrage (11, 12) qui supporte un dispositif de soudage (3, 4), est supporté par un autre premier support d'outil de cintrage (1) et est logé de manière mobile sur celui-ci, de préférence au moyen d'au moins un rail de guidage (5).

2. Machine de cintrage selon la revendication 1, **caractérisée en ce qu'**au moins un premier support d'outil de cintrage (11, 12) est logé de manière mobile le long de la ligne de cintrage (22).

3. Machine de cintrage selon la revendication 1 ou 2, **caractérisée en ce qu'**au moins un dispositif de soudage (3, 4) est mobile par rapport au premier support d'outil de cintrage (1), par lequel il est supporté, de préférence transversalement par rapport à la direction de son mouvement de travail (A).

4. Machine de cintrage selon l'une des revendications précédentes, **caractérisée en ce que** le premier support d'outil de cintrage (11, 12) - supportant le dispositif de soudage (3, 4) - est logé de manière mobile transversalement par rapport au mouvement de travail de l'autre premier support d'outil de cintrage (1).

5. Machine de cintrage selon l'une des revendications précédentes, **caractérisée en ce qu'**un premier dispositif de soudage (3) est maintenu par un premier support (11) et un deuxième dispositif de soudage (4) est maintenu par un deuxième support (12), dans laquelle le premier support (11) et le deuxième support (12) sont logés de manière mobile sur un autre premier support d'outil de cintrage (1), dans laquelle, de préférence, le premier support (11) et le deuxième support (12) sont des supports d'outils de cintrage pour le maintien d'outils de cintrage (14).

6. Machine de cintrage selon l'une des revendications précédentes, **caractérisée en ce que** la machine de cintrage (10) comprend au moins un capteur (6, 7), de préférence optique, pour la mesure d'une propriété, de préférence géométrique, d'une pièce (9) se trouvant dans la machine de cintrage (10), plus particulièrement pour la mesure d'un angle de cintrage de la pièce (9) et/ou d'un point de soudage (8) réalisé sur l'outil (9).

7. Machine de cintrage selon la revendication 6, **caractérisée en ce que** l'au moins un capteur (6, 7) est maintenu par le même support (11, 12) qui supporte un dispositif de soudage (3, 4), dans laquelle, de préférence, le support (11, 12), qui maintient le capteur (6, 7), est un support d'outil de cintrage pour le maintien d'au moins un outil de cintrage (14).

8. Machine de cintrage selon l'une des revendications précédentes, **caractérisée en ce qu'**un premier support d'outil de cintrage (1) est constitué d'une barre de cintrage allongée (17), dont le profil forme une cavité (18) s'étendant le long de l'extension longitudinale de la barre de cintrage, dans laquelle, de préférence, la cavité (18) est ouverte au niveau d'un côté longitudinal de la barre de cintrage (17) et/ou le profile de la barre de cintrage (17) formant la cavité (18) présente une forme de C.

9. Machine de cintrage selon la revendication 8, **caractérisée en ce que** l'au moins un dispositif de soudage (3, 4) est disposé, de préférence entièrement, dans la cavité (18) et/ou est logé de manière mobile à travers la cavité (18).

10. Machine de cintrage selon la revendication 8 ou 9, **caractérisée en ce que** la cavité (18) est délimitée, sur un côté, par au moins un outil de cintrage (13) maintenu par le premier support d'outil de cintrage (1) et, sur les autres côtés, par des parois.

11. Machine de cintrage selon l'une des revendications précédentes, **caractérisée en ce qu'**un premier support d'outil de cintrage (1, 11, 12) supporte au moins un outil de cintrage supérieur (13, 14) et au moins un outil de cintrage inférieur (13, 14), dans laquelle l'au moins un outil de cintrage supérieur (13, 14) et l'au moins un outil de cintrage inférieur (13, 14) sont disposés l'un en face de l'autre.

12. Machine de cintrage selon l'une des revendications précédentes, **caractérisée en ce que** la machine de cintrage (10) comprend au moins un deuxième support d'outil de cintrage (2, 20) pour le maintien d'au moins un outil de cintrage (21), plus particulièrement d'un outil de serrage pour le serrage d'une pièce (9), dans laquelle, pour la réalisation d'un mouvement de travail (A), l'au moins un premier support d'outil de cintrage (1, 11, 12) est mobile par rapport à l'au moins un deuxième support d'outil de cintrage (2, 20) et/ou en ce que la machine de cintrage (10) comprend au moins deux deuxièmes supports d'outils de cintrage (2, 20), mobiles l'un par rapport à l'autre, pour le serrage d'une pièce (9), dans laquelle un (2) des deuxièmes supports d'outils de cintrage présente la forme d'une barre de cintrage supérieure pour le maintien d'un outil de cintrage supérieur et un autre (20) des deuxièmes supports d'outils de cintrage présente la forme d'une barre de cintrage inférieure pour le maintien d'un outil de cintrage inférieur.

13. Machine de cintrage selon l'une des revendications précédentes, **caractérisée en ce que** l'au moins un dispositif de soudage (3, 4) est un dispositif de soudage à résistance et/ou un dispositif de soudage électrique et/ou un dispositif de soudage au laser et/ou un dispositif de soudage à l'arc.

14. Machine de cintrage selon l'une des revendications précédentes, **caractérisée en ce que** l'au moins un dispositif de soudage (3, 4) comprend un outil de soudage extensible (15) et/ou un outil de soudage (15) constitué d'au moins deux éléments (16) mobiles l'un par rapport à l'autre, de préférence sous la forme d'une pince de soudage, dans laquelle, de préférence, l'outil de soudage (15) peut être actionné de manière pneumatique et/ou hydraulique et/ou mécanique et/ou électrique.

15. Machine de cintrage selon l'une des revendications précédentes, **caractérisée en ce que** la machine de cintrage (10) comprend un dispositif de commande (19) pour le contrôle du mouvement de travail (A) de l'au moins un premier support d'outil de cintrage (1, 11, 12) et/ou pour le positionnement (P) d'un outil de cintrage (13, 14) au moyen de l'au moins un premier support d'outil de cintrage (1, 11, 12), dans laquelle le dispositif de commande (19) est relié avec le dispositif de soudage (3, 4) pour le contrôle d'un processus de soudage.

16. Procédé de cintrage d'une pièce (9), plus particulièrement d'une pièce en tôle, avec une machine de cintrage (10) selon l'une des revendications 1 à 15, **caractérisé en ce que**, sur une pièce (9) - au moyen d'un premier support d'outil de cintrage (1, 11, 12) et d'au moins un outil de cintrage (13, 14) qui y est maintenu - est effectué un processus de cintrage et **en ce que**, après le processus de cintrage, au moyen d'un dispositif de soudage (3, 4), au moins un point de soudage (8), plus particulièrement un point de soudure et/ou un cordon de soudure, est réalisé entre deuxième portions, à cintrer l'une sur l'autre, de la pièce (9).
